# EUROPÄISCHE PATENTANMELDUNG

(11) **EP 4 318 881 A1**
(43) Veröffentlichungstag der Anmeldung: **07.02.2024**
(21) Anmeldenummer: 23188624.3
(22) Anmeldetag: 31.07.2023
(51) Int. Cl.: H02K 1/14, H02K 1/18

(54) **ELEKTROMOTOR MIT SPEZIELLEM, LEICHT BEWICKELBAREN STATORKÖRPER**

(30) Priorität: 01.08.2022 DE 202022104369 U
(71) Anmelder: Wittur Holding GmbH, 85259 Wiedenzhausen (DE)
(72) Erfinder: Geßner, Ralf, 01239 Dresden (DE); Mann, Steffen, 01217 Dresden (DE); Kranz, Daniel, 01189 Dresden (DE)
(74) Vertreter: Misselhorn, Hein-Martin

(57) **Zusammenfassung**

Als Innenläufer ausgeführter Elektromotor mit einem Stator, welcher einen ringförmig ausgestalteten Statorkörper umfasst, welcher einen zylindrischen Freiraum in seinem Zentrum und eine Mehrzahl von Zähnen umfasst, wobei die Zähne jeweils aus einem Zahnkopf und einem Zahnschaft bestehen, und einem im Zentrum des Stators drehbeweglich gelagerten Rotor, wobei sich jeweils zwischen zwei unmittelbar benachbarten Zähnen des Statorkörpers eine Nut ausbildet, wobei in dieser Nut bevorzugt ein Abschnitt einer Spule aufgenommen und/oder gehalten wird, wobei der Statorkörper dadurch gebildet wird, dass der Zahnschaft eines jeden Zahns auf seiner dem Zahnkopf abgewandten Seite ein freies Ende aufweist und dass jeder Zahn über integrale, dünne Verbindungsfortsätze an seinem Zahnkopf mit den Zahnköpfen der beiden ihm unmittelbar benachbarten Zähne verbunden ist, wobei die Verbindungsfortsätze die Nut radial nach innen begrenzen und wobei mehrere Zähne als Langschaftzähne ausgebildet sind, indem sich das freie Ende ihres Zahnschafts radial weiter nach außen erstreckt als der Zahnschaft der übrigen Kurzschaftzähne und wobei der Rückschlussring aus mehreren Rohrschalen besteht, die jeweils so zwischen die Langschaftzähne eingelegt sind, dass die Nut zwischen zwei unmittelbar benachbarten Zähnen von einem Abschnitt der Innenfläche der jeweiligen Rohrschale des Rückschlussrings radial nach außen begrenzt wird.

## Beschreibung

Die Erfindung betrifft einen Elektromotor mit einem speziell ausgeführten, leicht bewickelbaren Statorkörper nach dem Oberbegriff des Anspruchs 1 sowie den entsprechenden erfindungsgemäßen Statorkörper nach dem Oberbegriff des Anspruchs 7 und Herstellung eines solchen Elektromotors nach Anspruch 9 sowie die Verwendung eines solchen Elektromotors nach Anspruch 10.

### TECHNISCHER HINTERGRUND

Der Stator eines Elektromotors stellt grundsätzlich den feststehenden, unbeweglichen Teil dar, welcher die stromdurchflossenen Ankerspulen (oder im Folgenden allgemein nur "Spulen") trägt, wodurch dem Stator ein Magnetfeld bzw. mehrere miteinander interagierende Magnetfelder aufgeprägt werden. Um eine ideale Weiterleitung dieser Magnetfelder innerhalb des Stators und damit im weiteren Verlauf auch die optimale Durchflutung des Rotors zu gewährleisten, besteht der Stator meist - zumindest größtenteils - aus einem ferromagnetischen Material, das diese magnetischen Feldlinien trägt.

Je nachdem, ob der Elektromotor mit Gleichstrom oder mit Wechselstrom bzw. Drehstrom betrieben wird, weist dieser Stator entsprechend abweichende Gestaltungsmerkmale auf. Im Zuge dieser Ausführungen werden nur Statoren von Drehstrommotoren näher betrachtet. Zudem wird bei Elektromotoren zwischen "Innenläufern" und "Außenläufern" unterschieden. Bei sogenannten Innenläufern oder Innenläufer-Motoren ist der angesprochene Stator fest mit dem umgebenden Motorgehäuse verbunden, während der sich bewegende - meist rotierende - Rotor vom Stator umschlossen ist und von diesem angetrieben wird. Im Zuge dieser Ausführungen werden nur Elektromotoren betrachtet, die als derartige Innenläufer ausgeführt sind.

Statoren von derartigen Drehstrommotoren sind meist so ausgeführt, dass sie mehrere Zähne aufweisen, die radial nach innen - zum Rotor hin - zeigen, wobei sich jeweils zwischen zwei unmittelbar benachbarten Zähnen ein Freiraum ausbildet, welcher "Nut" oder auch "Slot" genannt wird. Im Folgenden wird hierfür nur der Begriff "Nut" verwendet. Die Zähne selbst sind an ihrer dem Rotor abgewandten Seite meist von einem geschlossenen Ring, dem Rückschlussring oder Rückschlussjoch, miteinander verbunden, um das oben schon angesprochene optimale Tragen der magnetischen Feldlinien zu gewährleisten.

Die sich zwischen den Zähnen ausbildenden Nuten tragen die Spulen, die - von Strom durchflossen - ein magnetisches Feld bzw. magnetische Felder erzeugen. Bei Drehstrommotoren kann die Bewicklung des Stators bzw. der Statorzähne je nach Anwendungsfall stark variieren. Allgemein verhält es sich jedoch so: Um die Verteilung des Magnetfelds zu optimieren, werden die Wicklungen der Spulen in diesen Nuten um den Stator verteilt, wobei das Magnetfeld insgesamt die gleiche Anzahl von Nord- und Südpolen aufweist bzw. die gleiche Anzahl von "Hinleitern" und "Rückleitern". Das bedeutet, dass meist nur ein Abschnitt einer Spule von einer Nut getragen wird und ein weiterer Abschnitt derselben Spule von einer anderen Nut, welche mehrere Nuten von dieser ersten Nut entfernt liegen kann; jedoch nicht muss. So können sich beispielsweise der "Hinleiter" und der "Rückleiter" dieser Spule in zwei unterschiedlichen Nuten bzw. in an die Nuten angrenzenden Zähnen ausbilden, die mehrere Nuten voneinander entfernt liegen. Die Anordnung von Hinleitern und Rückleitern hängt jedoch vom gewählten Wicklungssystem ab, in welchem die Spulen um die Zähne gewickelt werden bzw. in den Nuten angeordnet sind.

Um beispielsweise dreiphasige Drehstrommotoren zu betreiben, müssen mindestens drei dieser Spulen nach dem oben genannten Prinzip am Stator bzw. in den Nuten angebracht werden, weshalb hierfür mindestens sechs Nuten benötigt werden. Diese Spulen werden natürlich mit Strom durchflossen, der jeweils eine andere Phase (U, V, W) aufweist, um so ein gewünschtes magnetisches Drehfeld im Stator zu erhalten. Ein derartig erzeugtes magnetisches Drehfeld von drei Spulen zeigt jedoch meist kein wünschenswertes Verhalten, weshalb pro Phase (U, V, W) meist mindestens eine weitere Spule am Stator angebracht wird, wobei diese Spule ebenfalls nach dem oben geschilderten Prinzip so angebracht wird, dass ein Abschnitt der Spule in einer ersten Nut und ein weiterer Abschnitt derselben Spule in einer zweiten Nut angebracht wird, der mehrere Nuten von der ersten Nut entfernt liegt.

So werden beispielsweise sechs Spulen am Stator angebracht, wobei jeweils zwei Spulen - nämlich die Spulen, die mit Strom der gleichen Phase beaufschlagt werden - in Reihe geschaltet sind. Ein derartig ausgeführter Stator benötigt entsprechend 12 Nuten, da hier pro Spule zwei - nicht angrenzende - Nuten genutzt werden.

Wie erwähnt, gibt es diverse Anwendungsfälle dieser Drehstrommotoren, weshalb es zu verschiedenen Verschaltungsmöglichkeiten bzw. zu einer variierenden Anzahl von verwendeten Spulen bzw. zu einer variierenden Beaufschlagung der Spulen mit Strom kommt.

Zudem existieren verschiedene Wicklungsmuster der Spulen am Stator; beispielsweise ein typisches Wicklungsmuster für einen dreiphasigen (U, W, V), vierpoligen Motor oder einen dreiphasigen, zweipoligen Motor. All diese Wicklungsmuster weisen eine bestimmte verschachtelte Anordnung der Spulen zueinander auf. Im Zuge dieser Ausführungen wird hierauf jedoch nicht genauer eingegangen, da das Grundprinzip für derartige Wicklungsmuster für die Erklärung der hier vorliegenden Erfindung schon hinreichend dargelegt wurde.

Die erwähnten Spulen bestehen im Allgemeinen meist aus vielen - teils mehreren Hundert - Drahtwindungen, die bevorzugt einen Lack tragen, um voneinander isoliert zu sein. Damit diese Spulen in den Nuten gehalten werden, verfügen die oben erwähnten Statorzähne - meist jeweils an ihrem, dem Rotor zugeneigten freien Ende - über eine abschnittsweise ausgeführte Verdickung des Zahnes, sogenannte "Zahnköpfe". Mithilfe dieser Zahnköpfe wird die Öffnung der Nuten, die dem Rotor zugewandt ist, deutlich verkleinert.

Dies stellt jedoch ein Problem bei der Montage des Stators dar. Bei dieser Montage müssen vor allem die Einzelteile des Stators zusammengefügt werden, der Stator nach oben erklärtem Prinzip mit den Spulen bewickelt werden und die Spulen entsprechend verschaltet werden. Hierbei ist genau dieses "Bewickeln", also das bestimmungsgemäße Einbringen der Spulen bzw.- Spulenabschnitte in die Nuten, jedoch aufgrund der verkleinerten Öffnung der Nuten erschwert. Das Bewickeln des Stators ist somit sehr umständlich, da bei Innenläufern ein Zugang zu den Nuten meist nur radial von innen möglich ist, da radial außen der Rückschlussring den Zugang zu den Nuten versperrt.

Das Bewickeln derartiger Statoren kann somit nur von sehr genauen Maschinen oder von Arbeitern per Hand durchgeführt werden, was sehr kostenaufwändig und/oder mit hohem Arbeitsaufwand verbunden ist.

Aus diesem Grund existieren auch Statoren, die aus mehreren Teilen aufgebaut sind, beispielsweise so, dass die Zähne nicht integrale Einzelteile darstellen und/oder dass der Rückschlussring des Stators mehrfach geteilt ist. So kann der Stator einfacher mit den Spulen bewickelt werden, da der Zugang zu den Nuten deutlich einfacher ist.

Doch auch diese Ausfertigung des Stators ist mit gewissen Nachteilen verbunden. So wird bei der Montage des Stators das Bewickeln zwar vereinfacht und/oder kann schneller durchgeführt werden, der zweite Montageschritt; das Zusammenfügen der Einzelteile des Stators wird jedoch deutlich erschwert bzw. verlängert. Zudem können beim Zusammenfügen der Teile die Wicklungen verschoben werden oder andere Probleme auftreten, die bei einem integralen Stator nicht auftreten können. Allgemein wird somit der gesamte Montagevorgang des Stators nur bedingt erleichtert.

### DIE ZUGRUNDE LIEGENDE AUFGABE

Angesichts dessen ist es die Aufgabe der Erfindung, ein einfaches System anzugeben, mit welchem die Montage des Stators eines Drehstrommotors vereinfacht wird.

### DIE ERFINDUNGSGEMÄSSE LÖSUNG

Erfindungsgemäß wird dieses Problem mit den Merkmalen des ersten Hauptanspruchs gelöst.

Zu diesem Zweck wird ein als Innenläufer ausgeführter Elektromotor mit einem Stator und einem im Zentrum des Stators drehbeweglich gelagerten Rotor vorgeschlagen. Der Stator umfasst hierbei einen ringförmig ausgestalteten Statorkörper, welcher einen zylindrischen Freiraum in seinem Zentrum und eine Mehrzahl von Zähnen umfasst, wobei die Zähne jeweils aus einem Zahnkopf und einem Zahnschaft bestehen. Der zylindrische Freiraum im Zentrum des Statorkörpers wird hierbei zum Einführen des Rotors benötigt.

Der Begriff "Statorkörper" wurde hierbei eingeführt, um eine bessere Differenzierung zum kompletten, montierten Stator vornehmen zu können. Der Statorkörper ist hierbei das zusammenhängende, bevorzugt die Spulen aufnehmende Gebilde, aus ferromagnetischem Material. Der Querschnitt des Statorkörpers bildet somit bevorzugt eine Art "Stern" aus, welcher einen kreisförmigen Freiraum in seinem Zentrum besitzt. Der Stator hingegen umfasst zusätzlich zu diesem Statorkörper zum Beispiel noch die Spulen und den Rückschlussring.

Zwischen zwei unmittelbar benachbarten Zähnen des Statorkörpers bildet sich jeweils, wie einleitend schon erklärt, ein Freiraum in Gestalt einer "Nut" aus, wobei in dieser Nut bevorzugt ein Abschnitt einer Spule aufgenommen und/oder gehalten wird. Diese Spule ist bevorzugt eine eingangs schon beschriebene Ankerspule mit mehreren Windungen und wird im Betrieb des Elektromotors mit Wechselstrom beaufschlagt. In einer Nut wird bevorzugt nur ein Abschnitt der Spule gehalten und ein weiter Abschnitt derselben Spule von einer anderen Nut, welche mehrere Nuten von dieser ersten Nut entfernt liegen kann. Es ist jedoch im Zuge der Erfindung bevorzugt so, dass die Spulen bevorzugt in einer konzentrierten Wicklung (auch: Zahnspulenwicklung; Einzelzahnwicklung oder Kompaktwicklung) angeordnet sind. Hierbei wird eine Spule um einen Zahn gewickelt, wodurch ein Abschnitt der Spule in einer ersten Nut liegt und ein weiterer Abschnitt der Spule in einer direkt an diese erste Nut angrenzenden Nut.

Der erfindungsgemäße Elektromotor zeichnet sich dadurch aus, dass der Statorkörper dadurch gebildet wird, dass der Zahnschaft eines jeden Zahns auf seiner dem Zahnkopf abgewandten Seite ein freies Ende aufweist und dass jeder Zahn über integrale, dünne Verbindungsfortsätze an seinem Zahnkopf mit den Zahnköpfen der beiden ihm unmittelbar benachbarten Zähne verbunden ist, wobei die Verbindungsfortsätze die Nut radial nach innen begrenzen. Hierbei sind die Verbindungsfortsätze "dünn", sofern sie eine Dicke von höchstens 3 mm, bevorzugt sogar höchstens 1 mm, besonders bevorzugt in einem Bereich zwischen 0,3 mm und 0,5 mm, aufweisen. Der Statorkörper ist somit selbst bevorzugt als integrales Einteil ausgeführt. Da die Verbindungsfortsätze wie erwähnt dünn aufgeführt sind, ist hier im Betrieb des Elektromotors die Sättigungsmagnetisierung des Materials sehr schnell bzw. nahezu sofort erreicht, wodurch der Betrieb des Elektromotors im Vergleich zu derzeit verwendeten Statorkonzepten nicht nennenswert gestört wird.

Mehrere Zähne des Statorkörpers sind als Langschaftzähne ausgebildet, indem sich das freie Ende ihres Zahnschafts radial weiter nach außen erstreckt als der Zahnschaft der übrigen Zähne, die als "Kurzschaftzähne" bezeichnet werden. Somit kann ein Rückschlussring, welcher aus mehreren Rohrschalen besteht, leicht an dem ringförmig ausgestalteten Statorkörper angebracht werden. Hierzu wird jeweils eine Rohrschale so zwischen zwei Langschaftzähne eingelegt, dass die Nut zwischen zwei unmittelbar benachbarten Zähnen von einem Abschnitt der Innenfläche der jeweiligen, die Nut überdeckenden, Rohrschale des Rückschlussrings radial nach außen begrenzt wird.

So bildet sich im Allgemeinen ein einfacher, einteiliger Statorkörper aus, dessen Nuten leicht von oben zugänglich sind, da erst der später an dem Statorkörper zu befestigende Rückschlussring diese Nuten radial nach außen schließt. Der Zugang zu den Nuten ist nicht wie bei den meisten anderen einteiligen Statoren durch einen fest mit den Zähnen verbundenen Rückschlussring versperrt, wobei der Rückschlussring hier die Zähne meist an ihren radial nach außen zeigenden Seiten verbindet. Die Zähne werden im erfindungsgemäßen Fall vielmehr an ihrer radial nach innen zeigenden Seite von den Verbindungsfortsätzen miteinander verbunden.

Somit wird das Bewickeln des Stators deutlich vereinfacht, da zunächst der Statorkörper bzw. dessen Nuten auf einfache Art und Weise mit den Spulen bzw. Spulenabschnitten versehen werden kann, da ein ungehinderter Zugang von oben auf die Nuten gewährleistet ist. Erst nach dem Bewickeln des Statorkörpers wird der Rückschlussring angebracht, was die Nuten schließlich schließt.

Da der Statorkörper selbst bevorzugt als integrales Einteil ausgeführt ist und zur Montage des Stators - nach dem Bewickeln des Statorkörpers - nur wenige Rohrschalen an dem Statorkörper angebracht bzw. diese nur zwischen die Langschaftzähne eingelegt werden müssen, ist auch der Aufwand für den Zusammenbau des Stators sehr überschaubar. Somit wird allgemein die Montage des Stators im Vergleich zu derzeit verwendeten Statorenkonzepten deutlich vereinfacht.

### BEVORZUGTE WEITERBILDUNGEN

Es besteht eine Reihe von Möglichkeiten, um die Erfindung so auszugestalten, dass ihre Wirksamkeit oder Brauchbarkeit noch weiter verbessert wird.

Eine besonders bevorzugte Ausführungsform besteht darin, dass der Statorkörper geblecht aufgebaut ist und aus einer Vielzahl von in Richtung der Rotordrehachse hintereinandergefügten Blechplatinen besteht. Ein derartiger Aufbau des Statorkörpers führt zu einer Minimierung der Wirbelstromverluste und trägt zu einem verbesserten Betriebsverhalten des Elektromotors bei. Trotz eines derartigen Aufbaus des Statorkörpers kann dieser nach dem Hintereinanderfügen der Blechplatinen als "integral" und "einteilig" betrachtet werden.

Darüber hinaus ist es besonders bevorzugt, wenn auch die Rohrschalen des Rückschlussrings geblecht aufgebaut sind und aus einer Vielzahl von in Richtung der Rotordrehachse hintereinandergefügten Blechplatinen bestehen. Auch dieser Aufbau führt zu einer Minimierung der Wirbelstromverluste und trägt zu einem verbesserten Betriebsverhalten des Elektromotors bei.

Des Weiteren ist es besonders bevorzugt, wenn die Kurzschaftzähne an ihrem freien Schaftende ein Formschlusselement vorzugsweise in Gestalt einer Außennut bilden, das in zusammengebautem Zustand an einem komplementären Formschlusselement der Rohrschale des Rückschlussrings formschlüssigen Halt findet. So wird der Rückschlussring automatisch zentriert und findet zusätzlichen Halt an dem Statorkörper, was schließlich einen Zusammenbau des Stators vereinfacht.

Eine weitere bevorzugte Ausführungsform besteht darin, dass einer oder mehrere der Langschaftzähne an ihrem freien Schaftende eine Leitungsnut besitzen, durch die mindestens eine Leitung geführt werden kann, bevorzugt von einer Stirnseite des Motors zur anderen. Dies trägt zur Flexibilität und Einfachheit des erfindungsgemäßen Statorkonzepts bei und führt im Endeffekt wiederum zu einer vereinfachten Montage des Stators, ohne dass zusätzliche Teile am Stator verbaut bzw. montiert werden müssen.

Darüber hinaus ist es besonders bevorzugt, wenn die mehreren Rohrschalen des Rückschlussrings so zwischen die Langschaftzähne eingelegt sind, dass die Außenumfangsfläche der Rohrschale an ihren beiden Umfangsenden jeweils völlig oder im Wesentlichen radial versatzfrei in die freie Stirnfläche der Langschaftzähne übergeht. So ist eine einfache Anbringung des Stators im Gehäuse möglich und es wird radial nach außen kein Freiraum zwischen Gehäuse und Stator geschaffen, wodurch der Elektromotor so kompakt wie möglich gebaut werden kann.

### FIGURENLISTE

Die Fig. 1 zeigt den erfindungsgemäßen Statorkörper in dreidimensionaler Ansicht.
Die Fig. 2 zeigt eine Detailansicht der Zähne des Statorkörpers (als einen Ausschnitt aus Fig. 1), wobei vor allem ein Langschaftzahn und ein Kurzschaftzahn gezeigt werden.
Die Fig. 3 zeigt eine Rohrschale des Rückschlussrings in dreidimensionaler Ansicht.
Die Fig. 4 zeigt den Statorkörper mit angebrachtem Rückschlussring in Gestalt mehrerer Rohrschalen in dreidimensionaler Ansicht.
Die Fig. 5 zeigt den Stator mit geschlossenem Wickelkopf in dreidimensionaler Ansicht.
Die Fig. 6 zeigt den Stator aus Fig. 5 und das Gehäuse des Elektromotors, wobei der Stator erst teilweise in die statoraufnehmende Öffnung des Gehäuses eingebracht wurde.
Die Fig. 7 zeigt analog zu Fig. 6 das Gehäuse des Elektromotors mit dem nun bestimmungsgemäß in das Gehäuse eingebrachten Stator in dreidimensionaler Ansicht.
Die Fig. 8 zeigt einen gesamten erfindungsgemäßen Elektromotor mit durchsichtigem Gehäuse in dreidimensionaler Ansicht.
Die Fig. 9 zeigt den Statorkörper, welcher mit einer bevorzugten Bewicklung versehen ist.
Die Fig. 10 zeigt analog zu Fig. 9 den Stator mit bevorzugter Bewicklung.

### BEVORZUGTES AUSFÜHRUNGSBEISPIEL

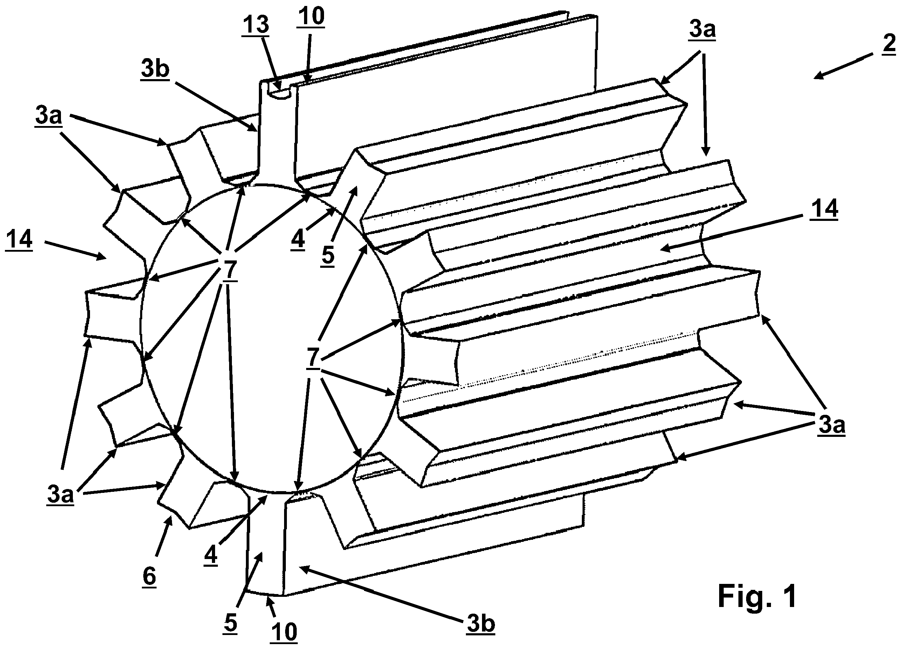

In den Fig. 1 bis Fig. 10 ist zum besseren Verständnis der obigen Ausführungen ein bevorzugtes Ausführungsbeispiel des erfindungsgemäßen Elektromotors 19 mit seinen Teilen - vor allem dem erfindungsgemäßen Statorkörper 2 und dem den Statorkörper umfassenden Stator 1 als Ganzen - gezeigt.

Zur Vereinfachung wird in diesen Figuren nur ein Stator 1 bzw. ein Statorkörper 2 mit zwölf Nuten 14 abgebildet und beschrieben, wobei natürlich auch Ausführungsformen mit weniger oder mit mehr Nuten 14 möglich sind. Zudem besteht der Rückschlussring 8 im gezeigten Ausführungsbeispiel aus insgesamt zwei Rohrschalen 9, wobei auch diese Zahl bei weiteren Ausführungsbeispielen variieren kann.

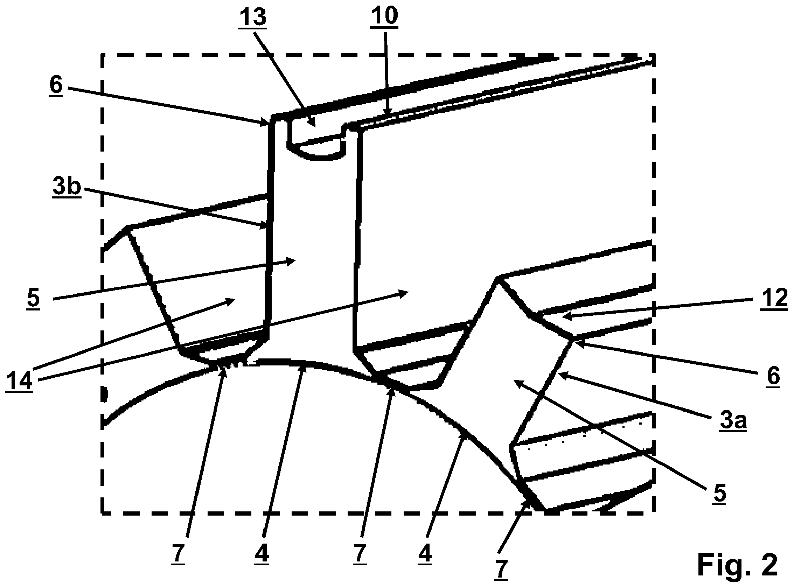

Zunächst zeigen die Fig. 1 und Fig. 2 den erfindungsgemäßen Statorkörper 2, welcher ringförmig ausgestaltet ist und einen zylindrischen Freiraum im Zentrum umfasst. Der Statorkörper 2 umfasst hierbei mehrere, bevorzugt gleichmäßig über den Umfang verteilte Zähne 3a und 3b, die bevorzugt die gleiche Zahnbreite aufweisen. Bei diesen Zähnen wird zwischen Kurzschaftzähnen 3a und Langschaftzähnen 3b unterschieden. Sowohl die Kurzschaftzähne 3a als auch die Langschaftzähne 3b bestehen jeweils aus einem Zahnkopf 4 auf der radial innenliegenden Seite und einem Zahnschaft 5 auf der radial außenliegenden Seite. Der Zahnschaft 5 von Langschaftzähnen 3b erstreckt sich radial weiter nach außen als der Zahnschaft 5 der übrigen Kurzschaftzähne 3a.

Die Zähne 3a und 3b sind an ihren Zahnköpfen 4 über Verbindungsfortsätze 7 mit ihrem jeweiligen direkt benachbarten Zahn 3a bzw. 3b verbunden, wodurch der Statorkörper 2 als integrales Einteil ausgebildet ist. Es sei hierbei nochmals erwähnt, dass sich der Statorkörper 2 bevorzugt aus mehreren hintereinandergefügten Blechplatinen zusammensetzt. So werden hierzu bevorzugt einzelne Blechplatinen hergestellt, die die Querschnittsform des Statorkörpers 2 aufweisen. Diese Blechplatinen werden daraufhin hintereinandergefügt, bevorzugt geschweißt, wodurch sich der gezeigte Statorkörper 2 ergibt. Nach diesem Fügevorgang kann der Statorkörper 2 weiterhin als integrales Einteil betrachtet werden. Diese Blechplatinen werden hierbei bevorzugt auf Elektroblechen hergestellt, die eine Dicke zwischen 0,2 mm und 1 mm, besonders bevorzugt zwischen 0,35 mm und 0,5 mm aufweisen.

Während die Zähne an ihren Zahnköpfen miteinander verbunden sind, bilden die jeweiligen Zahnschäfte 5 der Zähne 3a bzw. 3b an ihren radial nach außen stehenden Enden bevorzugt nicht direkt miteinander verbundene freie Enden 6 aus. Die freien Enden 6 der Kurzschaftzähne 3a umfassen hierbei bevorzugt jeweils ein Formschlusselement 12 - bevorzugt in Form einer Außennut. Zudem umfasst mindestens ein Langschaftzahn 3b an seinem freien Ende 6 bevorzugt eine Leitungsnut 13 zur Leitungsdurchführung. Sowohl diese Leitungsnut 13 als auch das Formschlusselement 12 in Gestalt einer Außennut erstrecken sich hierbei bevorzugt durchgängig über die gesamte Länge des Statorkörpers 2. Fig. 1 zeigt beispielhaft einen Statorkörper 2, wobei nur ein Langschaftzahn 3b eine Leitungsnut 13 umfasst. Zudem sind hier die freien Stirnflächen 10 der Langschaftzähne 3b erkennbar, die bei dem Langschaftzahn 3b mit der Leitungsnut 13 von ebendieser unterbrochen werden.

Zwischen zwei direkt benachbarten Zähnen bildet sich ein Freiraum aus, welcher als Nut 14 bezeichnet wird. In diesen Nuten 14 werden später die Spulen bzw. Spulenabschnitte aufgenommen und/oder gehalten. Es ist erkennbar, dass jede Nut 14 radial nach innen durch die Verbindungsfortsätze 7 begrenzt ist.

Vor allem Fig. 1 zeigt deutlich, dass sich im Zentrum des Statorkörpers 2 ein Hohlraum in Form eines Zylinders ausbildet, in welchen später der Rotor eingebracht wird. Die Ausbildung dieses Hohlzylinders wird vor allem durch die spezielle Anordnung der Zähne (3a und 3b) und der Verbindungsfortsätze 7 und den Radien, die die Zahnköpfe 4 im radial nach innen zeigenden Bereich aufweisen, erreicht. Die Rundlauftoleranz des zylindrischen Hohlraums beträgt hierbei meist unter 0,2 mm, bevorzugt sogar unter 0,1 mm.

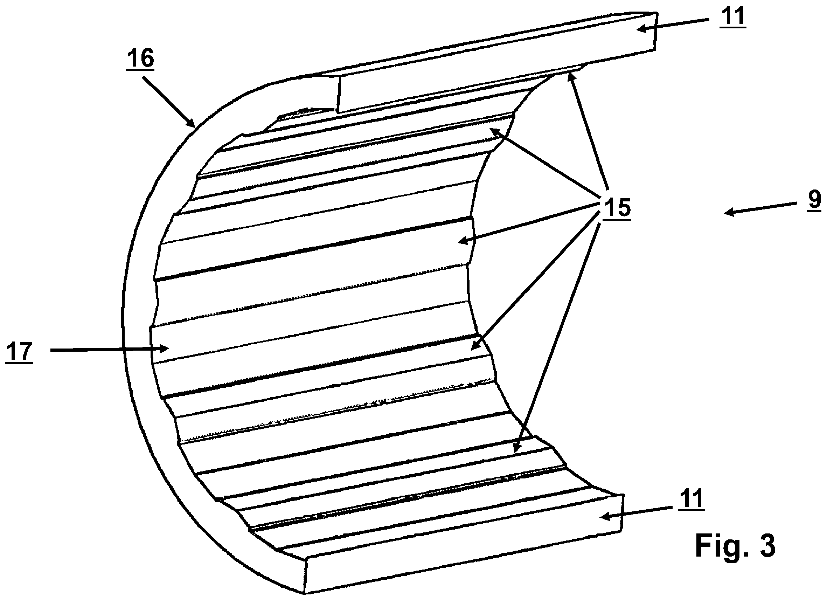

Um eine massive, magnetisch leitende Verbindung zwischen den Zähnen zu schaffen, wird ein Rückschlussring 8 benötigt, der auch oftmals als Rückschlussjoch bezeichnet wird. Dieser Rückschlussring 8 verbindet die Zähne bevorzugt an ihren freien Enden 6 oder zumindest im Bereich der freien Enden 6 miteinander. Hierzu werden erfindungsgemäß bevorzugt Rohrschalen 9 verwendet, die zwischen die Langschaftzähne 3b eingelegt werden. Im gezeigten Ausführungsbeispiel setzt sich der Rückschlussring 8 aus zwei Rohrschalen 9 zusammen, weshalb der Statorkörper 2 auch nur zwei Langschaftzähne 3b benötigt. Fig. 3 zeigt hierbei beispielhaft eine dieser Rohrschalen 9. Es sei hierbei erwähnt, dass es auch möglich und sogar bevorzugt ist, dass die Rohrschalen 9 ebenso wie der Statorkörper 2 aus hintereinandergefügten Blechplatinen aufgebaut ist.

In Fig. 3 ist zudem auch die bevorzugt zumindest größtenteils glatte Außenumfangsfläche 16 der Rohrschale 9 zu erkennen. Die Innenfläche 17 der Rohrschale 9 umfasst diverse Formschlusselemente 15, die so gestaltet und angeordnet sind, dass diese Formschlusselemente 15 im eingelegten Zustand in dem Statorkörper 2 einen Formschluss mit den Formschlusselementen 12 der Kurzschaftzähne 3a ausbilden.

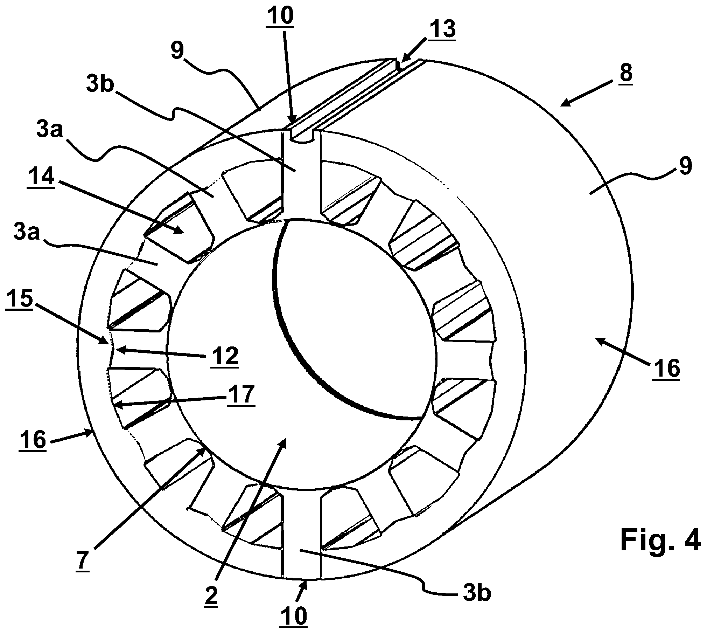

Die Fig. 4 zeigt diesen Zustand, in welchem die beiden Rohrschalen 9 zwischen die Langschaftzähne 3b des Statorkörpers 2 eingelegt wurden, wobei die beiden Rohrschalen 9 nun einen kompletten Rückschlussring 8 ausbilden. Hier ist auch gut erkennbar, wie die Formschlusselemente 15 der Rohrschalen 9 in die Formschlusselemente 12 der Kurzschaftzähne 3a greifen. Die beiden Umfangsenden 11 der jeweiligen Rohrschale 9 liegen hier an den Seitenflächen des jeweiligen Langschaftzahns 3b an; idealerweise so, dass die Außenumfangsfläche 16 versatzfrei in die freie Stirnfläche 10 des jeweiligen Langschaftzahns 3b übergeht. In Fig. 4 ist auch gut erkennbar, dass die Nuten 14 radial nach außen von den Rohrschalen 9 bzw. der Innenfläche 17 der Rohrschale 9 begrenzt werden.

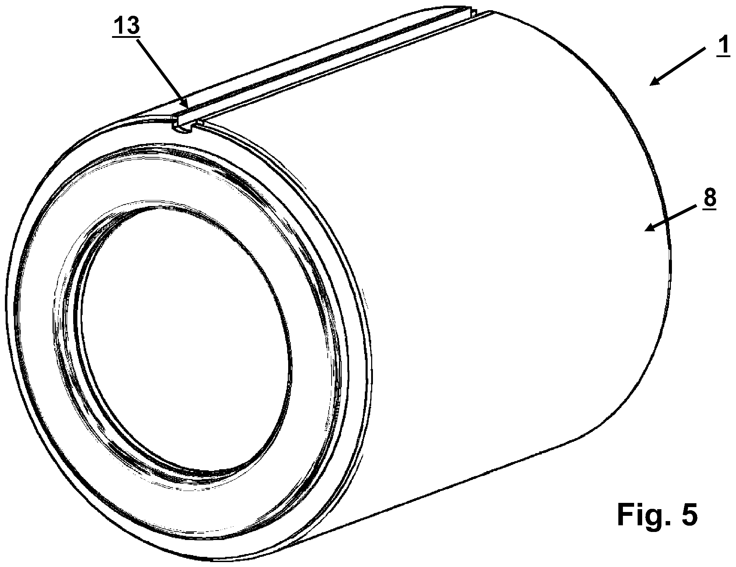

Es sei zudem betont, dass die Darstellung in Fig. 4 zur besseren Übersicht keine Bewicklung des Statorkörpers 2 mit den Spulen zeigt, welche bei bestimmungsgemäßer Montage des Stators vor dem Einlegen der Rohrschalen 9 vorgenommen werden muss. Den final montierten Stator 1 zeigt schließlich Fig. 5, wobei die Bewicklung des Stators hier verdeckt wird, da der Wickelkopf bestimmungsgemäß geschlossen ist.

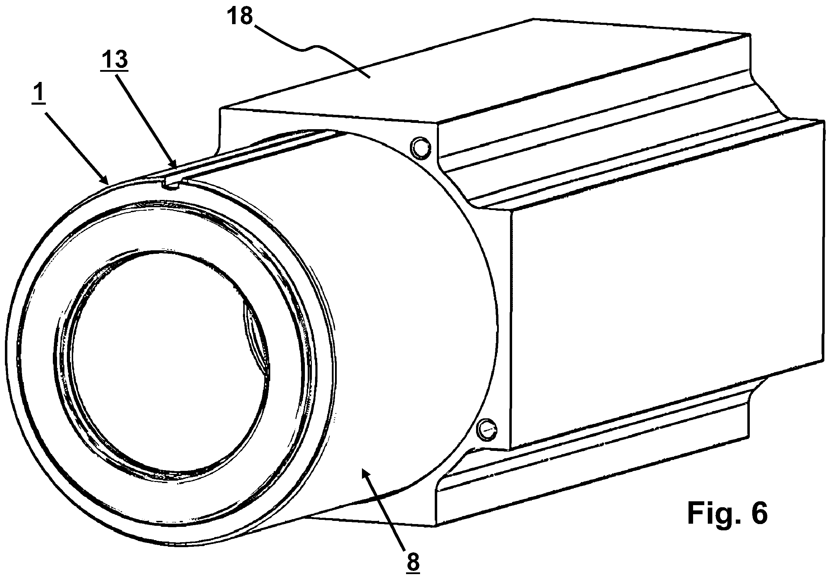

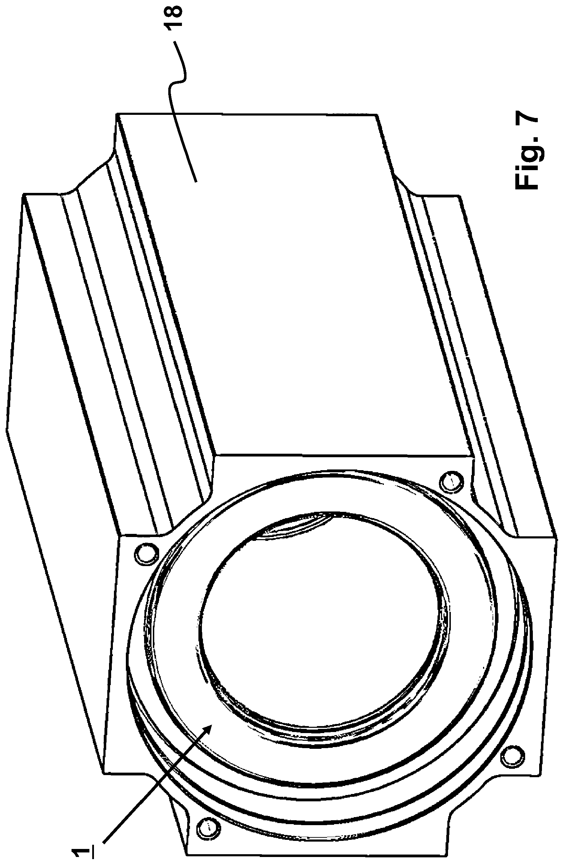

Um einen Elektromotor ausbilden zu können, muss dieser Stator 1 in ein Gehäuse 18 bzw. in dessen statoraufnehmende Öffnung eingeschoben werden, was Fig. 6 zeigt. In seiner bestimmungsgemäßen Position im Gehäuse 18 wird der Stator 1 dann im Gehäuse 18 fixiert, wobei die so erhaltene Baugruppe in Fig. 7 erkennbar ist.

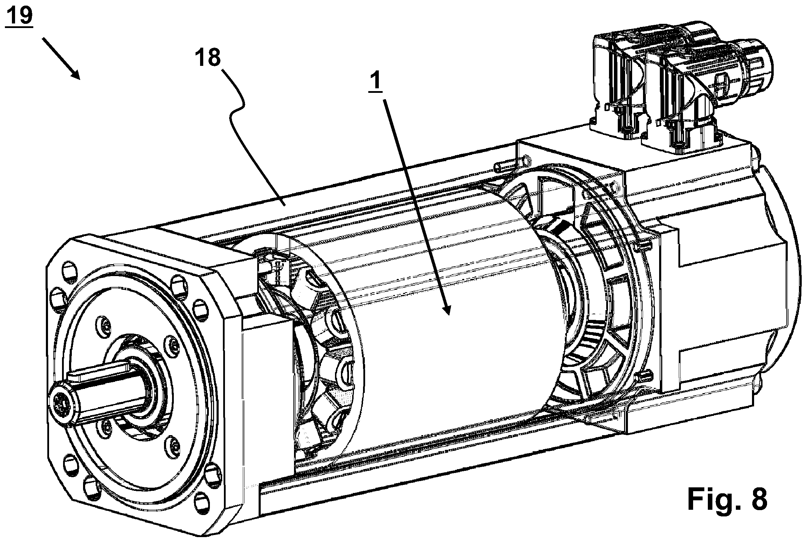

Nach weiteren Montageschritten, vor allem dem Einlegen des Rotors in den Freiraum, der von dem Stator 1 in seiner Mitte zur Verfügung gestellt wird, bildet sich so ein gesamter Elektromotor 19 aus. Dieser ist in Fig. 8 abgebildet. Hier ist der Stator 1 in seinem Gehäuse 18 zu erkennen, welches zur besseren Darstellung durchsichtig dargestellt wird. In Fig. 8 sind noch weitere Bauteile des Elektromotors 19 zu erkennen, wie beispielsweise die Rotorwelle, weiterführende Anschlüsse etc., auf welche im Zuge dieser Ausführungen jedoch nicht näher eingegangen wird.

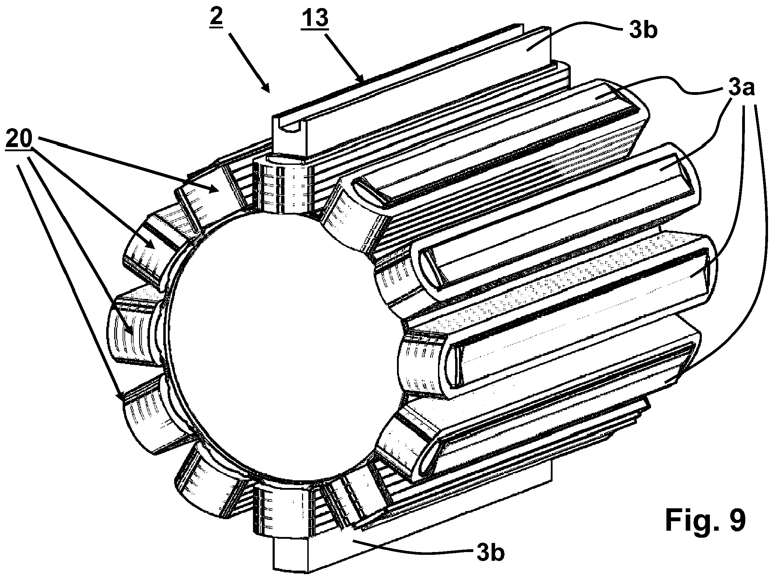

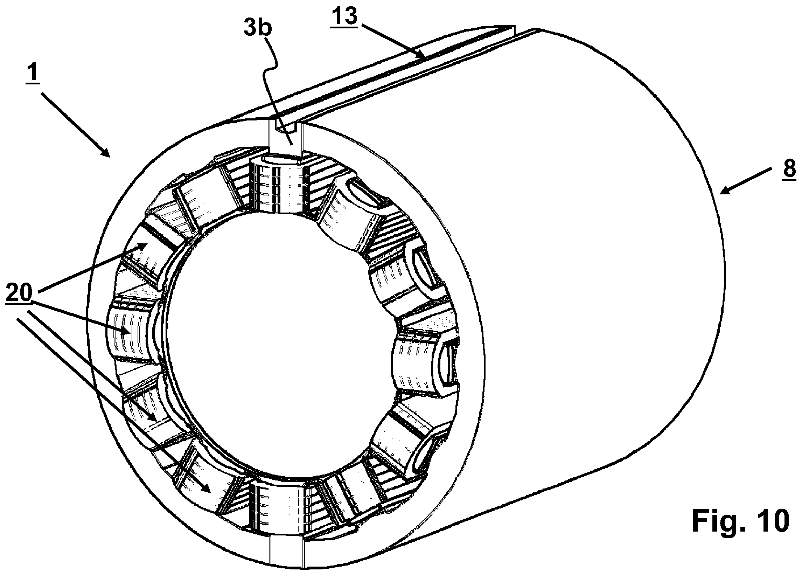

Es ist zudem in Fig. 8 erkennbar, dass der Stator 1 bzw. der Statorkörper 2 hier bewickelt dargestellt ist, um auch die bevorzugte Wicklungsform des Stators 1 darzustellen. Hierzu dienen auch die Fig. 9 und Fig. 10, in welchen die Bewicklung des Stators 1 genauer erkannt werden kann. Hierzu wird die Spule 20 schematisch als zusammenhängendes, massives Bauteil dargestellt, obwohl diese in Realität natürlich aus mehreren Drahtwicklungen besteht. Die bevorzugte Wicklung ist so gestaltet, dass jeder Zahn 3a und 3b von je einer Spule umwickelt wird, wodurch sich die schon angesprochene konzentrierte Wicklung ausbildet.

### BEZUGSZEICHENLISTE

- 1: Stator
- 2: Statorkörper
- 3a: Kurzschaftzahn
- 3b: Langschaftzahn
- 4: Zahnkopf
- 5: Zahnschaft
- 6: freies Ende des Zahns bzw. des Zahnschafts
- 7: Verbindungsfortsatz
- 8: Rückschlussring
- 9: Rohrschale des Rückschlussringes
- 10: freie Stirnfläche eines Langschaftzahns
- 11: Umfangsende der Rohrschale
- 12: Formschlusselement (Außennut) eines Kurzschaftzahns
- 13: Leitungsnut eines Langschaftzahns
- 14: Nut
- 15: Formschlusselement der Rohrschale
- 16: Außenumfangsfläche der Rohrschale
- 17: Innenfläche der Rohrschale
- 18: Gehäuse des Elektromotors
- 19: Elektromotor
- 20: Spule

## Patentansprüche

1. Als Innenläufer ausgeführter Elektromotor (19) mit einem Stator (1), welcher einen ringförmig ausgestalteten Statorkörper (2) umfasst, welcher einen zylindrischen Freiraum in seinem Zentrum und eine Mehrzahl von Zähnen (3a, 3b) umfasst, wobei die Zähne (3a, 3b) jeweils aus einem Zahnkopf (4) und einem Zahnschaft (5) bestehen, und einem im Zentrum des Stators (1) drehbeweglich gelagerten Rotor, wobei sich jeweils zwischen zwei unmittelbar benachbarten Zähnen (3a, 3b) des Statorkörpers (2) eine Nut (14) ausbildet, wobei in dieser Nut (14) bevorzugt ein Abschnitt einer Spule (20) aufgenommen und/oder gehalten wird, **dadurch gekennzeichnet, dass** der Statorkörper (2) dadurch gebildet wird, dass der Zahnschaft (5) eines jeden Zahns (3a, 3b) auf seiner dem Zahnkopf (4) abgewandten Seite ein freies Ende (6) aufweist und dass jeder Zahn (3a, 3b) über integrale, dünne Verbindungsfortsätze (7) an seinem Zahnkopf (4) mit den Zahnköpfen (4) der beiden ihm unmittelbar benachbarten Zähne (3a, 3b) verbunden ist, wobei die Verbindungsfortsätze (7) die Nut (14) radial nach innen begrenzen und wobei mehrere Zähne (3a, 3b) als Langschaftzähne (3b) ausgebildet sind, indem sich das freie Ende (6) ihres Zahnschafts (5) radial weiter nach außen erstreckt als der Zahnschaft (5) der übrigen Kurzschaftzähne (3a) und wobei der Rückschlussring (8) aus mehreren Rohrschalen (9) besteht, die jeweils so zwischen die Langschaftzähne (3b) eingelegt sind, dass die Nut (14) zwischen zwei unmittelbar benachbarten Zähnen (3a, 3b) von einem Abschnitt der Innenfläche (17) der jeweiligen Rohrschale (9) des Rückschlussrings (8) radial nach außen begrenzt wird.

2. Als Innenläufer ausgeführter Elektromotor (19) nach Anspruch 1, **dadurch gekennzeichnet, dass** der Statorkörper (2) geblecht aufgebaut ist und aus einer Vielzahl von in Richtung der Rotordrehachse hintereinandergefügten Blechplatinen besteht.

3. Als Innenläufer ausgeführter Elektromotor (19) nach Anspruch 1 oder 2, **dadurch gekennzeichnet, dass** die Rohrschalen (9) des Rückschlussrings (8) geblecht aufgebaut sind und aus einer Vielzahl von in Richtung der Rotordrehachse hintereinandergefügten Blechplatinen bestehen.

4. Als Innenläufer ausgeführter Elektromotor (19) nach einem der vorhergehenden Ansprüche, **dadurch gekennzeichnet, dass** die Kurzschaftzähne (3a) an ihrem freien Schaftende (6) ein Formschlusselement (12), vorzugsweise in Gestalt einer Außennut, bilden, das in zusammengebautem Zustand an einem komplementären Formschlusselement (15) der Rohrschale (9) des Rückschlussrings (8) formschlüssigen Halt findet.

5. Als Innenläufer ausgeführter Elektromotor (19) nach einem der vorhergehenden Ansprüche, **dadurch gekennzeichnet, dass** einer oder mehrere der Langschaftzähne (3b) an ihrem freien Schaftende (6) eine Leitungsnut (13) besitzen, durch die mindestens eine Leitung geführt werden kann, bevorzugt von einer Stirnseite des Motors (19) zur anderen.

6. Als Innenläufer ausgeführter Elektromotor (19) nach einem der vorhergehenden Ansprüche, **dadurch gekennzeichnet, dass** die mehreren Rohrschalen (9) des Rückschlussrings (8) so zwischen die Langschaftzähne (3b) eingelegt sind, dass die Außenumfangsfläche (16) der Rohrschale (9) an ihren beiden Umfangsenden (11) jeweils zumindest im Wesentlichen radial versatzfrei in die freie Stirnfläche (10) der Langschaftzähne (3b) übergeht.

7. Ringförmig ausgestalteter Statorkörper (2) mit einem zylindrischen Freiraum in seinem Zentrum und mit einer Mehrzahl von Zähnen (3a, 3b), wobei die Zähne (3a, 3b) jeweils aus einem Zahnkopf (4) und einem Zahnschaft (5) bestehen, wobei sich jeweils zwischen zwei unmittelbar benachbarten Zähnen (3a, 3b) des Statorkörpers (2) eine Nut (14) ausbildet, wobei in dieser Nut (14) bevorzugt ein Abschnitt einer Spule (20) aufgenommen und/oder gehalten wird, **dadurch gekennzeichnet, dass** der Statorkörper (2) dadurch gebildet wird, dass der Zahnschaft (5) eines jeden Zahns (3a, 3b) auf seiner dem Zahnkopf (4) abgewandten Seite ein freies Ende (6) aufweist und dass jeder Zahn (3a, 3b) - bevorzugt mit Ausnahme der Endzähne - über integrale, dünne Verbindungsfortsätze (7) an seinem Zahnkopf (4) mit den Zahnköpfen (4) der beiden ihm unmittelbar benachbarten Zähne (3a, 3b) verbunden ist, wobei die Verbindungsfortsätze (7) die Nut (14) radial nach innen begrenzen und wobei mehrere Zähne (3a, 3b) als Langschaftzähne (3b) ausgebildet sind, indem sich das freie Ende (6) ihres Zahnschafts (5) radial weiter nach außen erstreckt als der Zahnschaft (5) der übrigen Kurzschaftzähne (3a).

8. Statorkörper (2) nach Anspruch 7 mit einem oder mehreren den Statorkörper (2) betreffenden Merkmalen aus den Ansprüchen 2 bis 6.

9. Herstellung eines als Innenläufer ausgeführten Elektromotors (19) nach einem der Ansprüche 1 bis 6.

10. Verwendung eines als Innenläufer ausgeführten Elektromotors (19) nach einem der Ansprüche 1 bis 6.
